# EUROPÄISCHE PATENTSCHRIFT

(11) **EP 4 410 665 B1**
(45) Veröffentlichungstag und Bekanntmachung des Hinweises auf die Patenterteilung: **18.02.2026**
(21) Anmeldenummer: 24155087.0
(22) Anmeldetag: 31.01.2024
(51) Int. Cl.: B64C 1/00, B64C 3/26, B64C 21/00

(54) **AERODYNAMISCHER PROFILKÖRPER FÜR LUFTFAHRZEUGE**
AERODYNAMIC PROFILE FOR AIRCRAFT
CORPS AERODYNAMIQUE PROFILE POUR AERONEFS

(30) Priorität: 31.01.2023 DE 102023102200
(43) Veröffentlichungstag der Anmeldung: 07.08.2024
(73) Patentinhaber: Deutsches Zentrum für Luft- und Raumfahrt e.V., 53227 Bonn-Oberkassel (DE)
(72) Erfinder: Schollerer, Martin, 38108 Braunschweig (DE); Ückert, Christian, 21682 Stade (DE)
(74) Vertreter: Gramm, Lins & Partner Patent- und Rechtsanwälte PartGmbB

(56) Entgegenhaltungen:
- DE-A1- 102021 105 806
- US-A- 5 014 934
- US-A- 5 368 258

## Beschreibung

Die Erfindung betrifft einen aerodynamischen Profilkörper für Luftfahrzeuge mit einer aerodynamisch umströmbaren Oberfläche.

Das Projekt, welches zu diesem Patentantrag geführt hat, hat Finanzmittel vom Clean Sky 2 Joint Undertaking (JU) Programm im Rahmen der Vereinbarung Nr. 945583 erhalten. Das JU erhält Unterstützung aus dem Forschungs- und Innovationsprogramm Horizont 2020 der Europäischen Union und von anderen Mitgliedern des Clean Sky 2 JU Programms.

Im Sinne der vorliegenden Erfindung werden unter dem Begriff eines aerodynamischen Profilkörpers diejenigen Elemente eines Luftfahrzeuges (beispielsweise Flugzeuge wie Verkehrsflugzeuge oder Transportflugzeuge sowie Hubschrauber) verstanden, die von dem Rumpf des Luftfahrzeuges abstehend angeordnet sind und bei bestimmungsgemäßen Gebrauch des Luftfahrzeuges durch äußere Luftschichten angeströmt werden, wodurch aerodynamischer Kräfte auf das Luftfahrzeug hervorgerufen werden können. Aerodynamische Profilkörper eines Luftfahrzeuges sind dabei insbesondere Tragflügel bzw. Tragflächen einer Flügelstruktur sowie Leitwerke (beispielsweise Höhenleitwerke, Seitenleitwerke oder Querruder). Bei den Leitwerken wird die aerodynamische Kraft dabei oftmals erst beim Auslenken der Steuerfläche aus der Neutralposition hervorgerufen, wenn die Leitwerke durch eine äußere Luftschicht angeströmt werden, wobei Leitwerke auch ohne ausgeschlagene Steuerfläche aerodynamische Kräfte erzeugen, wenn sie mit einem Anstellwinkel gegenüber der Luft angeströmt werden. In der Regel werden die aerodynamischen Profilkörper eines Luftfahrzeuges dabei während der Bewegung des Luftfahrzeuges durch den Luftraum durch die äußere Luftschicht angeströmt.

Die Profilflächen solcher Profilkörper, d. h. die äußere aerodynamisch umströmbare Oberfläche, besitzen grundsätzlich laminare Grenzschicht, die bei heutigen Verkehrsflugzeugen jedoch frühzeitig in turbulente Grenzschichten umschlagen. Eine solche turbulente Grenzschicht weist dabei einen deutlich erhöhten Reibungswiderstand auf als eine laminare Grenzschicht. Durch Formabweichungen in den Profilflächen, wie Lücken, Stufen und Welligkeiten in der Kontur der Profilfläche, wird die Instabilität der Grenzschicht begünstigt, was zu einem frühzeitigen Umschlag von der laminaren Grenzschicht in die turbulente Grenzschicht führt.

Können Formabweichungen nicht vermieden werden, kann je nach Anwendungsfall eine gewisse Stufenhöhne toleriert werden, wobei die konkrete tolerierbare Stufenhöhe davon abhängt, ob es sich um eine aufwärts gerichtete oder abwärts gerichtete Stufe handelt und wo die Formabweichung innerhalb der Strömung zu finden ist (Ort der Störung). Werden Formabweichungen, die größer sind als die zulässigen Werte, im vorderen Bereich der aerodynamischen Profilkörper vermieden, führt dies zu einem späteren Umschlag der Strömung von einer laminaren Grenzschicht in eine turbulente Grenzschicht und somit zu einem erweiterten Bereich der laminaren Profilumströmung. Aufgrund der Tatsache, dass eine laminare Grenzschicht einen geringeren Reibungswiderstand im Flugbetrieb hat als eine turbulente Grenzschicht, kann durch eine möglichst langanhaltende laminare Grenzschicht Treibstoff eingespart werden und somit der Betrieb des Luftfahrzeuges ökonomisch und ökologisch effizienter gestaltet werden.

Eine solche natürliche Laminarhaltung setzt dabei an dem aerodynamischen Profilkörper neben einer störungsfreien Oberfläche, bei der Welligkeiten, Stufen und Spalte sowie Köpfe von Verbindungselementen in der Oberfläche weitgehend vermieden werden, auch eine geeignete Druckverteilung voraus, um einen vorzeitigen Umschlag der laminaren Grenzschichtströmung zu einer turbulenten Grenzschichtströmung zu vermeiden.

Hierneben ist auch die hybride Laminarhaltung bekannt, bei der im vorderen Bereich des aerodynamischen Profilkörpers (im Bereich der Vorderkante) durch eine Perforation oder geschlitzte aerodynamische Oberfläche die Grenzschicht abgesaugt wird, sodass sich kontinuierlich eine frische Grenzschicht anlegen kann. Durch die aktive Absaugung kann die Grenzschicht auch unter bestimmten Bedingungen laminar gehalten werden, bei denen die natürliche Laminarhaltung nicht mehr möglich ist.

Neben diesen strömungscharakteristischen Aspekten eines aerodynamischen Profilkörpers, die grundlegende aerodynamische Eigenschaften des Profilkörpers des Luftfahrzeuges betreffen, rücken aus ökonomischer und ökologischer Sicht auch wartungsbedingte Aspekte in den Vordergrund, die insbesondere die Reparierbarkeit und Austauschbarkeit einzelner Elemente des Luftfahrzeuges betreffen. Aufgrund der Tatsache, dass der vordere Bereich eines aerodynamischen Profilkörpers eine exponierte Stelle darstellt, die anfällig ist für Schlagschäden, ist es beim Design des Luftfahrzeuges zu berücksichtigen, dass dieser vordere Bereich, insbesondere die Vorderkante des aerodynamischen Profilkörpers, ausgetauscht werden kann. Gerade vor dem Hintergrund der Verwendung von Faserverbundwerkstoffen als äußere und tragende Schichten einer Vorderkante eines aerodynamischen Profilkörpers muss sichergestellt werden, dass eine solche Vorderkante in einem normalen Wartungszyklus (meist über Nacht) durch das Wartungspersonal ausgetauscht werden kann und darüber hinaus nach Abschluss des Austausches der aerodynamische Profilkörper mit der neuen Vorderkante ebenfalls laminare strömungscharakteristische Eigenschaften aufweist.

Die Anordnung der Flügelvorderkante an den Hauptkörper des aerodynamischen Profilkörpers kann dabei einerseits durch eine Verbindungsanordnung erfolgen, bei der Verbindungselemente durch die äußere Strömungsoberfläche hindurchgeführt sind, um dann mit innenliegenden Elementen im Eingriff zu stehen. Hierdurch entstehen jedoch an der äußeren Strömungsoberfläche die für die Laminarhaltung unerwünschten Stufen und Spalte, sodass eine derartige Verbindungsanordnung grundsätzlich einer laminaren Grenzschichtströmung entgegensteht.

Andererseits kann die Verbindungsanordnung auch derart ausgestaltet werden, dass sie durch innenliegende Verbindungselemente die Vorderkante an den Hauptkörper befestigt, ohne dass hierfür die Verbindungselemente durch die äußere Strömungsoberfläche hindurchgeführt werden müssen. Dies hat allerdings den Nachteil, dass bei der Montage und dem Austausch der Vorderkante ein Zugriff in den Innenraum des Profilkörpers möglich sein muss. Bei einer Tragfläche, die beispielsweise über ausfahrbare Hochauftriebshilfen verfügt, ist dies unter Umständen möglich. Bei Leitwerken hingegen, die beidseitig laminar angeströmt werden sollen und die insbesondere über keine ausfahrbaren Klappen und/oder Hochauftriebshilfen an der Vorderkante verfügen, ist dies nur über in der Strömungsoberfläche vorgesehenen Wartungsklappen möglich, die wiederum die Aufrechterhaltung der laminaren Grenzschichtströmung negativ beeinträchtigen. Daher kommen innenliegende Verbindungselemente bei Leitwerken zur Befestigung der Vorderkante in der Regel nicht infrage, wenn eine durchgehende laminare Grenzschichtströmung gewünscht ist.

Aus der WO 2013/ 000 447 A1 ist die Anbindung einer Flügelvorderkante an die Flügeloberschale bekannt, bei der die Flügeloberschale im Verbindungsbereich unter die Flügelvorderkante geschoben wird und dann im Überlappungsbereich die beiden Elemente mithilfe von durch die äußere Oberfläche geführten Bolzen miteinander verbunden werden. Der Verbindungsbereich liegt dabei in einer Nut unterhalb der aerodynamischen Oberfläche und wird nach dem Einbringen der Bolzen mit einer Füllmasse verschlossen, um so eine insgesamt glatte und störungsfreie aerodynamische Oberfläche zu erhalten. Nachteil hierbei ist, dass diese Methode einen besonders hohen Aufwand für das exakte Auftragen der Füllmasse benötigt. Da marktübliche Füllmassen sowohl bei der Aushärtung als auch bei niedrigen Außentemperaturen, wie sie im Reiseflug von Verkehrsflugzeugen auftreten, stark schrumpfen, ergeben sich unter Flugbedingungen Abweichungen von der gewünschten Sollkontur, die die Erhaltung der laminaren Strömung stören können. Zudem hat es sich in der Praxis gezeigt, dass bei einem Austausch des Bauteils zunächst die Bolzen unter der Füllmasse freizulegen sind, was den Zeitaufwand für den Austausch der Vorderkante deutlich erhöht.

Aus der DE 10 2014 102 117 A1 ist ein Verfahren bekannt, bei dem mithilfe eines Befestigungswinkels, der an dem Vorderholm des Flügelkastens angeordnet wird, die Flügelvorderkante befestigt wird, ohne die äußere Flügeloberschale unter die Flügelvorderkante führen zu müssen. Auch hier werden Verbindungselemente durch die äußere Oberfläche der Flügelvorderkante geführt, um diese an dem ersten Schenkel des Befestigungswinkels zu befestigen. Die Verbindungselemente werden anschließend durch eine äußere Metallschicht der Flügelvorderkante abgedeckt. Nachteilig hierbei ist, dass ein Austausch der Flügelvorderkante den Zugriff in den Innenraum der Vorderkante benötigt, da der Austausch hierbei durch das Lösen der Befestigung des zweiten Schenkels des Befestigungswinkels am Vorderholm oder durch innenliegende Schrauben der Befestigung des ersten Schenkels erfolgt. Ein Zugriff auf den Innenraum ist jedoch insbesondere bei Leitwerken nicht ohne weiteres gegeben.

Ein ähnliches Verbindungskonzept ist auch aus der DE 10 2015 105 298 A1 bekannt, bei dem jedoch der Befestigungswinkel integral mit der Vorderkante verbunden ist und somit keine Verbindungselemente durch die Oberfläche der Vorderkante geführt werden müssen. Der verbleibende Spalt zwischen den beiden gefügten Bauteilen (Fügespalt) soll dabei auch weiterhin mit einer Füllmasse geschlossen werden. Dieses Verbindungsprinzip setzt ebenfalls darauf, Verbindungselemente ins Innere des Flügels zu verlegen, um Störungen der äußeren Oberfläche zu vermeiden.

Aus der EP 2 445 785 A1 ist eine Verbindung zwischen einer Flügelvorderkante und einem Flügelkasten bekannt, bei dem die Verbindungselemente, die durch die äußere Oberfläche innerhalb einer tiefergesetzten Nut geführt werden, nachträglich durch ein Metallblech bündig mit der aerodynamischen Kontur abgedeckt werden. Fertigungstoleranzen sollen durch die Dicke der Klebstoffmasse ausgeglichen werden. Nachteilig hierbei ist, dass in den Randbereichen des Metallbleches in der Nut ein Fügespalt verbleibt, der durch eine Füllmasse verschlossen werden muss, wenn Störungen für die Aufrechterhaltung einer laminaren Grenzschichtströmung vermieden werden sollen. Ein weiterer Nachteil dieser Füllmasse ist das temperaturabhängige Schrumpfen sowie die Temperaturdifferenz zwischen der Reparatur am Boden und dem Luftbetrieb, sodass auch mit Füllmassen Störungen in der Oberfläche nicht gänzlich vermieden werden können.

Aus der DE 10 2021 105 806 A1 ist ein aerodynamischer Profilkörper bekannt, bei dem die Vorderkante an den Flügelkasten mittels einer Verbindungsanordnung erfolgt, bei der die Verbindungselemente durch die äußere Strömungsoberfläche geführt sind. Im Bereich der Verbindungsanordnung werden diese an der äußeren Strömungsoberfläche sichtbaren Verbindungselemente durch eine biegesteife Abdeckfolie so abgedeckt, dass der zwischen den beiden Bauteilen entstehende Fügespalt durch die Abdeckfolie überspannt wird. Damit die Abdeckfolie im Flugbetrieb aufgrund der Anströmung und dem damit verbundenen Unterdruck angehoben wird, drückt die Abdeckfolie wölbungsbedingt auf den Flügelkasten. Die Wölbung der Abdeckfolie selbst kann dabei ebenfalls störend auf die laminare Grenzschichtströmung wirken.

Die US 5,106,037 A und US 5,014,934 A zeigen eine Abdeckung, die im Bereich der Verbindung zweier Elemente eines Flügelkörpers angeordnet wird und sich dabei sowohl von dem einen Flügelkörper als auch in Richtung des anderen Flügelkörpers erstreckt.

Die US 4,888,451 A offenbart ebenfalls die Verbindung zwischen zwei Elementen eines Flügelkörpers, wobei auch hier ein Abdeckelement, dass keine Abdeckfolie ist, im Bereich der Verbindungsanordnung zum Abdecken der Bolzen eingesetzt wird. Dabei wird ein kleiner Spalt überdeckt, wobei an der äußeren Strömungsoberfläche weiterhin ein Spalt verbleibt, der gerade nicht abgedeckt wird.

Die US 5,368,258 A offenbart eine äußere Strömungsoberfläche einer Turbine eines Flugzeuges, in der sich eine lösbare Revisionsklappe befindet. Der Spalt zwischen dem festen Teil der Strömungsoberfläche und dem lösbaren Teil der Strömungsoberfläche bildet dabei eine Störung in der äußeren Oberfläche, wodurch ein Umschlag von einer laminaren Grenzschichtströmung in eine turbulente Grenzschichtströmung begünstigt wird. Um dies zu verhindern, wir hier vorgeschlagen, die turbulente Grenzschicht der äußeren Strömungsoberfläche im Fügespalt abzusaugen, sodass weiterhin eine laminare Grenzschichtströmung realisiert werden kann.

Es ist daher Aufgabe der vorliegenden Erfindung einen verbesserten aerodynamischen Profilkörper für Luftfahrzeuge anzugeben, bei dem die Vorderkante ohne notwendigen Zugriff von innen austauschbar und leicht zu ersetzen ist und darüber hinaus dennoch eine laminare Grenzschichtströmung begünstigt wird.

Die Aufgabe wird mit dem aerodynamischen Profilkörper gemäß Anspruch 1 erfindungsgemäß gelöst. Vorteilhafte Ausgestaltungen der Erfindung finden sich in den entsprechenden Unteransprüchen.

Gemäß Patentanspruch 1 wird ein aerodynamischer Profilkörper für Luftfahrzeuge vorgeschlagen, der eine aerodynamisch umströmbare äußere Oberfläche aufweist. Im bestimmungsgemäßen Gebrauch des Luftfahrzeuges im Luftbetrieb wird die äußere Oberfläche durch die umgebende Außenluft angeströmt und kann so gegebenenfalls aerodynamische Kräfte auf das Luftfahrzeug ausüben. Im Falle eines Tragflügels als aerodynamischer Profilkörper kann durch das Anströmen der äußeren Oberfläche eine Auftriebskraft erzeugt werden.

Gattungsgemäß weist der aerodynamische Profilkörper einen Hauptkörper auf mit einer Hauptkörperaußenschicht als Teil der aerodynamisch umströmbaren Oberfläche auf. Ein solcher Hauptkörper des aerodynamischen Profilkörpers kann beispielsweise ein Flügelkasten eines Tragflügels oder ein Leitwerkskasten eines Leitwerkes sein.

Insbesondere bei großskaligen Profilstrukturen weist der Hauptkörper eine Hauptkörper-Tragstruktur auf, an der die Hauptkörperaußenschicht als Teil der aerodynamisch umströmbaren Oberfläche angeordnet ist. Der Hauptkörper weist dabei eine Tragstruktur beispielsweise in Form von Rippen und Holmen auf, wobei die Tragstruktur bevorzugt aus einem Faserverbundwerkstoff hergestellt ist. Auf der Tragstruktur des Hauptkörpers ist eine Außenschicht als Teil der aerodynamisch umströmbaren Oberfläche aufgebracht, die auch Außenhaut oder Außenschale genannt wird und ebenfalls aus einem Faserverbundwerkstoff gebildet sein kann. Hauptkörper-Tragstruktur und Hauptkörperaußenschicht können dabei eigenständige Bauelemente sein, die insbesondere lösbar aneinandergefügt sind oder können einstückig ausgebildet sein, d.h. Hauptkörper-Tragstruktur und Hauptkörperaußenschicht sind untrennbar (nicht zerstörungsfrei lösbar) miteinander verbunden. Dies kann bspw. derart erfolgen, dass beide Bauelemente in einem Prozessschritt einstückig hergestellt werden.

Gattungsgemäß weist der aerodynamische Profilkörper weiterhin einen Vorderkantenkörper mit einer Vorderkantenaußenschicht auf. Ein solcher Vorderkantenkörper, bei einem Flügel auch Flügelvorderkante genannt, ist an dem Hauptkörper des aerodynamischen Profilkörpers insbesondere lösbar befestigt, um so einen aerodynamischen Profilkörper zu bilden. Bei dem Vorderkantenkörper handelt es sich um den vorderen Teil des aerodynamischen Profilkörpers, der in Flugrichtung vor dem Hauptkörper liegt und somit eine exponierte Position einnimmt.

Vorzugsweise weist auch der Vorderkantenkörper eine Vorderkanten-Tragstruktur, auf die dann die Vorderkantenaußenschicht als Teil der aerodynamisch umströmbaren Oberfläche insbesondere lösbar angeordnet ist. Die Tragstruktur der Vorderkante kann dabei ebenfalls aus einem Faserverbundwerkstoff hergestellt sein, wobei die Tragstruktur ebenfalls aus Rippen und Holmen gebildet sein kann. Denkbar sind aber auch Fachwerkstrukturen, welche die nötige Stabilität der Vorderkante bilden. Die Vorderkantenaußenschicht ist dabei auf diese Tragstruktur aufgebracht und bildet somit einen Teil der aerodynamisch umströmbaren Oberfläche, wobei in der Vorderkantenaußenschicht gegebenenfalls eine Perforation vorhanden sein kann, um die Grenzschichtströmung an der Außenschicht absaugen zu können und somit eine hybride Laminarhaltung zu erzielen. Auch die Vorderkantenaußenschicht kann aus einem Faserverbundwerkstoff gebildet sein.

Mithilfe einer Verbindungsanordnung ist der wenigstens eine Vorderkantenkörper an dem Hauptkörper befestigt bzw. befestigbar, wobei hierfür Verbindungselemente im Bereich der Verbindungsanordnung von außen durch die aerodynamisch umströmbare Oberfläche hindurchgeführt und mit im Inneren des Profilkörpers liegenden Gegenstücken zur Befestigung im Eingriff stehen. Solche Verbindungselemente können beispielsweise Schrauben sein, die in ein im Inneren des Profilkörpers angeordneten Gewinde als Gegenstück eingreifen und so eine form- und/oder kraftschlüssige Verbindung bilden. Denkbar sind aber auch Bolzen, die in einen entsprechenden Formschluss als Gegenstück eingreifen. Durch die Verbindungselemente wird der Vorderkantenkörper mit dem Hauptkörper vorwiegend im Formschluss verbunden und aneinander fixiert.

Durch diese Verbindungsanordnung, wie sie gattungsgemäß aus dem Stand der Technik bekannt ist, liegen die Kopfenden der Verbindungselemente in der aerodynamisch umströmbaren Oberfläche und stören so die Laminarhaltung der Grenzschicht. Darüber hinaus existiert in der aerodynamisch umströmbaren Oberfläche ein sich spannweitig erstreckenden Fügespalt, der sich aus der Anordnung des Vorderkantenkörpers an dem Hauptkörper zwischen der Vorderkantenaußenschicht und der Hauptkörperaußenschicht ausbildet und in Bezug auf die Grenzschichtströmung eine Stufe und einen Spalt bildet, an der eine laminare Grenzschicht in eine turbulente Grenzschicht umschlägt.

Es ist daher weiterhin vorgesehen, dass im Bereich der Verbindungsanordnung ein Abdeckelement auf die äußere aerodynamisch umströmbare Oberfläche aufgebracht ist, wobei die durch die aerodynamisch umströmbare Oberfläche hindurchgeführten Verbindungselemente durch das Abdeckelement verdeckt bzw. abgedeckt werden und wobei sich das Abdeckelement über den Fügespalt zwischen dem Teil der aerodynamisch umströmbaren Oberfläche des Hauptkörpers und dem Teil der aerodynamisch umströmbaren Oberfläche des Vorderkantenkörpers erstreckt.

Das Abdeckelement überdeckt demnach die Verbindungsanordnung mit den Verbindungselementen sowie den zwischen der Vorderkantenaußenschicht und Hauptkörperaußenschicht entstehenden Fügespalt, wodurch Störungen in der aerodynamisch umströmbaren Oberfläche des Profilkörpers eliminiert werden. Es hat sich gezeigt, dass mittels des Abdeckelementes, welches sowohl die Verbindungselemente als auch den Fügespalt abdeckt, eine natürliche laminare Grenzschichtströmung begünstigt wird und ein vorzeitiger Umschlag in eine turbulente Grenzschichtströmung weitgehend vermieden werden kann.

Das Abdeckelement ist dabei derart ausgebildet, dass es im Bereich der Verbindungsanordnung einen Teil der aerodynamisch umströmbaren Oberfläche des Profilkörpers bildet. Das Abdeckelement hat demnach eine Fügeseite und eine Außenseite, wobei das Abdeckelement mit der Fügeseite, beispielsweise mittels eines Klebstoffes, auf die äußere Oberfläche des Profilkörpers im Bereich der Verbindungsanordnung angeordnet wird (bspw. an dem Vorderkantenkörper), während die gegenüberliegende Außenseite einen Teil der äußeren umströmbaren Oberfläche des Profilkörpers bildet.

Hierdurch wird erreicht, dass trotz einer Verbindungsanordnung, bei der Verbindungselemente durch die äußere Strömungsoberfläche geführt werden müssen, eine laminare Grenzschichtströmung begünstigt wird, wobei die Zugänglichkeit zu der Verbindungsanordnung nach Entfernen des Abdeckelementes weiterhin von außen gegeben ist. Demnach lässt sich die Vorderkante austauschen, ohne dass hierfür ein Zugriff in den Innenraum des Profilkörpers bzw. der Vorderkante nötig ist. Dies ist insbesondere bei Leitwerkskörpern wichtig, da diese in der Regel keine Zugänglichkeit in den Innenraum aufweisen, sowie bei Flügeln, die keine ausfahrbaren Klappen auf der Profilunterseite (bspw. Krügerklappe) als Hochauftriebshilfen aufweisen. Mithilfe der vorliegenden Erfindung werden darüber hinaus Füllmassen, wie sie im Stand der Technik in den Fügespalt eingesetzt werden, überflüssig und wobei gleichzeitig der Austausch der Vorderkante erleichtert wird. Darüber hinaus ist der Gegenstand der vorliegenden Erfindung problemlos mit einer Grenzschichtabsaugung an der Vorderkante kombinierbar, wodurch eine hybride Laminarhaltung prozesssicher erreicht werden kann.

Das Abdeckelement kann dabei auf den Bereich der Verbindungsanordnung aufgeklebt werden. Dabei ist ein Klebstoff zu wählen, der insbesondere eine entsprechende Festigkeit in Bezug auf die möglichen Fluggeschwindigkeiten des Luftahrzeuges hat und der ggf. die hohen Temperaturunterschiede zwischen Bodenbetrieb und Luftbetrieb aushält. Außerdem sollte der Klebstoff so gewählt werden, dass sich das Abdeckelement durch eine entsprechende Kraft (bspw. Scherkraft oder Abschälkraft) von der Oberfläche im Bereich der Verbindungsanordnung lösen lässt, um an die darunter befindlichen Verbindungselemente zu gelangen.

Das Abdeckelement ist dabei nur an einem der beiden Körper, also entweder an dem Vorderkantenkörper (bevorzugt) oder an dem Hauptkörper, befestigt (beispielsweise geklebt) und drückt mit einer entsprechenden Andruckkraft auf den jeweils anderen Körper. So kann das Abdeckelement in einer bevorzugten Ausführungsform nur an dem Vorderkantenkörper befestigt sein und erstreckt sich dann lose über den abzudeckenden Fügespalt, wobei das Abdeckelement dann mit einer Andruckkraft in Richtung Hauptkörper gedrückt wird und dort aufliegt.

Um nun zu verhindern, dass das Abdeckelement sich im Flugbetrieb aufgrund der Druckverhältnisse bei der Anströmung des Profilkörpers löst und nach oben gebogen wird, ist erfindungsgemäß vorgesehen, dass der Fügespalt mit einer Drucksenke in Wirkverbindung steht, sodass ein im Verhältnis zum äußeren Umgebungsdruck verringerter Unterdruck im Fügespalt einstellbar ist.

Durch das Abdeckelement entsteht durch den Fügespalt eine Kavität, die mithilfe einer Drucksenke mit einem Unterdruck beaufschlagt werden kann, sodass mithilfe des Unterdrucks in dieser durch das Abdeckelement und dem Fügespalt gebildete Kavität das Abdeckelement an den Profilkörper gedrückt wird. Hierdurch kann im Flugbetrieb sichergestellt werden, dass das sich nicht von dem Profilkörper löst und in eine Position gebogen wird, in der das Abdeckelement eine Störung in der laminaren Grenzschichtströmung darstellt. Vielmehr wird durch den Unterdruck sichergestellt, dass das Abdeckelement in Richtung Profilkörper gedrückt wird und so ein Ablösen verhindert werden kann.

Mithilfe der vorliegenden Erfindung wird somit erreicht, dass das Abdeckelement in seiner eigentlichen Position verbleibt und so eine laminare Grenzschichtströmung im dauerhaften Flugbetrieb begünstigt. Ein Befestigen des Abdeckelementes an beiden Körpern ist damit nicht notwendig, was aufgrund des hohen Temperaturunterschieds zwischen Bodenbetrieb und Flugbetrieb zu erheblichen Problemen hinsichtlich der Wärmeausdehnung führt sowie aufgrund von Bewegungen zwischen den Bauteilen zu elastischen Verformungen (bspw. Falten werfen oder reißen) des Abdeckelementes führen kann.

Mithilfe der vorliegenden Erfindung kann darüber hinaus des Weiteren erreicht werden, dass das Abdeckelement dünner ausgebildet sein kann, da die Andruckkraft durch den im Fügespalt eingestellten Unterdruck realisiert wird. Durch ein dünneres Abdeckelement wird der Gewichtseintrag in das Flugzeug reduziert.

Darüber hinaus kann mithilfe der vorliegenden Erfindung die für die Andruckkraft mitverantwortliche Vorwölbung des Abdeckelementes in Richtung des Profilkörpers reduziert werden, sodass die Laminarhaltung der Grenzschichtströmung dadurch weiter positiv beeinflusst wird. Ohne die Einstellung des Unterdrucks im Fügespalt müsste gegebenenfalls mit einer größeren Vorwölbung des Abdeckelementes gerechnet werden, da durch diese Vorwölbung eine wölbungsbedingte Andruckkraft realisiert wird. Durch den Unterdruck kann diese wölbungsbedingte Andruckkraft reduziert werden, indem die benötigte Vorwölbung reduziert wird.

Ein Luftfahrzeug im Sinne der vorliegenden Erfindung ist dabei insbesondere ein selbstangetriebenes Luftfahrzeug bzw. Flugzeug. Derartige motorisierte Flugzeuge erzeugen selbstständig einen Vortrieb durch mindestens ein am Flugzeug angeordnetes Triebwerk, bspw. Motor oder Turbine mit Propeller oder Strahltriebwerke. Ein derartiges Luftfahrzeug im Sinne der vorliegenden Erfindung kann dabei bspw. ein Verkehrsflugzeug sein. Verkehrsflugzeuge weisen in der Regel eine maximale Startmasse von mehr als 50 Tonnen und/oder eine Höchstgeschwindigkeit von mehr als 600 km/h auf.

Gemäß einer Ausführungsform ist vorgesehen, dass die Vorderkantenaußenschicht eine Mehrzahl von Öffnungen aufweist, die mit der Drucksenke derart in Wirkverbindung stehen, dass durch die Öffnungen in der Vorderkantenaußenschicht die Grenzschichtströmung an der äußeren Strömungsoberfläche abgesaugt wird.

Durch eine aktive Absaugung der Grenzschicht im Bereich der Vorderkantenaußenschicht wird es möglich, eine langanhaltende laminare Grenzschichtströmung im Bereich der Vorderkante aufrechtzuerhalten. Hierfür weist die Vorderkantenaußenschicht eine Mehrzahl von kleinen Öffnungen auf (auch bezeichnet als Perforation der Außenschicht), die mit einer Drucksenke so in Wirkverbindung stehen, dass die äußere Umgebungsluft an der äußeren Vorderkantenaußenschicht durch die Öffnungen ins Innere des Profilkörpers eingesaugt wird. Hierfür ist es beispielsweise denkbar, dass die Öffnungen in der Vorderkantenaußenschicht in eine oder mehrere innenliegende Druckkammern münden, wobei die innenliegende Druckkammer mithilfe der Drucksenke mit einem Unterdruck beaufschlagt wird. Dieser Unterdruck wird dabei permanent aufrechterhalten. Durch den Unterdruck wird dabei die äußere Umgebungsluft durch die Öffnungen in der Vorderkantenaußenschicht in die Druckkammer gesaugt, sodass eine aktive Grenzschichtabsaugung realisiert wird.

Demnach ist gemäß einer Ausführungsform hierzu vorgesehen, dass die Öffnungen in der Vorderkantenaußenschicht mit mindestens einer Druckkammer in Wirkverbindung stehen, in der mittels der Drucksenke ein Unterdruck eingestellt oder einstellbar ist, wobei die Druckkammer weiterhin über mindestens einen Druckausgleichskanal mit dem Fügespalt in Wirkverbindung steht, um den Unterdruck auch im Fügespalt einzustellen.

Hierbei entsteht der Vorteil, dass nur eine Drucksenke, beispielsweise in Form eines Kompressors, notwendig ist, um sowohl die Grenzschicht abzusaugen als auch den Unterdruck im Fügespalt bereitzustellen. Hierfür steht die Druckkammer über ein oder mehrere Druckausgleichskanäle mit dem Fügespalt so in Wirkverbindung, dass der in der Druckkammer eingestellte Unterdruck auch im Fügespalt wirkt. Diese Ausführungsform bedarf somit keiner weiteren Drucksenke, die separat einen Unterdruck im Fügespalt einstellt. Die Luft im Fügespalt wird dabei über die Druckausgleichskanäle in Richtung Druckkammer abgesaugt.

Gemäß einer Ausführungsform ist vorgesehen, dass der Fügespalt über einen Fluidkanal mit einer Unterdruckpumpe als Drucksenke in Wirkverbindung steht. Diese Ausführungsform ist besonders dann vorteilhaft, wenn der Flügelkörper keine aktive Grenzschichtabsaugung aufweist. Aber auch dann kann eine zusätzliche Unterdruckpumpe als Drucksenke nur für den Fügespalt im Sinne eines redundanten Systems vorteilhaft sein.

Gemäß einer Ausführungsform ist vorgesehen, dass die Verbindungsanordnung einen keilförmigen Einleger hat, dessen nach außen weisende Oberfläche in Richtung des Fügespaltes nach innen in Richtung Profilkörper abgeschrägt ist. Ein solcher keilförmiger Einleger ist bspw. dann sinnvoll, wenn entweder die Vorderkantenaußenschicht unter die Hauptkörperaußenschicht oder andersherum geführt ist, um im Bereich der Verbindungsanordnung eine Überlappung der Vorderkantenaußenschicht mit der Hauptkörperaußenschicht zu erzielen. Die Verbindungselemente werden dann sowohl durch die Vorderkantenaußenschicht als auch durch die Hauptkörperaußenschicht geführt und bilden so einen Formschluss dieser beiden Elemente zur Befestigung der Vorderkante an dem Hauptkörper. Durch die keilförmigen Einleger wird der Fügespalt, der durch das Herabsetzen einer der Außenschichten unter die jeweils andere Außenschicht entsteht, verkleinert. Durch das Abschrägen des keilförmigen Einlegers nach innen in Richtung Profilkörper können Fertigungstoleranzen ausgeglichen werden, sodass das Abdeckelement den Fügespalt ohne Ausbildung von Welligkeiten und Stufen für eine prozesssichere Laminarhaltung überdecken kann. Am Fügespalt zwischen dem keilförmigen Einleger und der Außenschicht des entsprechenden Körperelementes (Hauptkörper oder Vorderkantenkörper) entsteht demnach an der nach außen weisenden Oberfläche eine Abstufung, die dann durch das Abdeckelement überdeckt wird.

Gemäß einer Ausführungsform hierzu ist vorgesehen, dass das Abdeckelement mit einem Außenrand des den Fügespalt überspannenden Abschnittes auf die nach außen weisende Oberfläche des keilförmigen Einlegers mit einer Auflagekraft drückt. Hierdurch wird erreicht, dass Dickentoleranzen der Vorderkantenaußenschicht oder der Hauptkörperaußenschicht sowie Fertigungstoleranzen bei der Absatzhöhe des keilförmigen Einlegers durch das Zusammenspiel der wölbungsbedingten Vorspannung des Abdeckelementes sowie der schräg verlaufenden Auflagefläche (nach außen weisende Oberfläche) des keilförmigen Einlegers ausgeglichen werden können. Die wölbungsbedingte Vorspannung des Abdeckelementes gewährleistet, dass das Abdeckelement nicht bereits an der zum Spalt hin liegenden Kante aufliegt, wodurch das Abdeckelement an dieser Kante nach oben gedrückt werden würde und an dem Außenrand (Hinterkante) nicht mehr aufliegen würde.

Gemäß einer Ausführungsform ist vorgesehen, dass das Abdeckelement zumindest im den Fügespalt überspannenden Abschnitt eine wölbungsbedingte Vorspannung in Richtung der aerodynamisch umströmbaren Oberfläche aufweist.

Durch die Vorspannung in Richtung der aerodynamisch umströmbaren Oberfläche wird das Abdeckelement beim Überspannen des Fügespaltes auf die dahinterliegende Oberfläche gedrückt, wodurch im Bereich des Fügespaltes ein sanfter Übergang in der äußeren Strömungsoberfläche durch das Abdeckelement realisiert wird.

Durch die Einstellung eines Unterdrucks im Fügespalt kann dabei die wölbungsbedingte Vorspannung gegenüber dem Stand der Technik reduziert werden, da mithilfe des Unterdrucks eine weitere Kraft auf das Abdeckelement wirkt. Durch die Reduzierung der Vorwölbung wird dabei die äußere Oberfläche insgesamt im Bereich der Verbindungsanordnung ebener und glatter, was die Aufrechterhaltung der laminaren Grenzschichtströmung begünstigt.

Gemäß einer Ausführungsform ist vorgesehen, dass das Abdeckelement mit einem Außenrand des den Fügespalt überspannenden Abschnittes auf einer Erosionsschutzschicht drückt, die aus einem von dem Material der Hauptkörperaußenschicht verschiedenen Material gebildet ist.

Gemäß einer Ausführungsform ist vorgesehen, dass das Abdeckelement aus einem Metallmaterial, insbesondere aus Stahl, Titan oder Aluminium, oder aus einem Kunststoffmaterial gebildet ist.

Gemäß einer Ausführungsform ist vorgesehen, dass das Abdeckelement eine im Wesentlichen biegesteife Abdeckfolie ist.

Gemäß einer Ausführungsform ist vorgesehen, dass das Abdeckelement eine Dicke von weniger als 0,6 mm, vorzugsweise nicht mehr als 0,25 mm und besonders vorzugsweise zwischen 0,125 mm und 0,1 mm hat. Hierdurch wird erreicht, dass das auf die äußere Oberfläche aufgebrachte Abdeckelement innerhalb zulässiger Werte für eine laminar umströmbare Oberfläche bleibt und somit keine Stufen oder Kanten erzeugt werden, die einen Umschlag in eine turbulente Grenzschicht begünstigen. Gegebenenfalls kann vorgesehen sein, dass die senkrecht zur Strömungsrichtung liegenden Außenränder bzw. Außenkanten abgeschrägt sind.

Gemäß einer Ausführungsform ist vorgesehen, dass im Bereich der Verbindungsanordnung sich die Hauptkörperaußenschicht und die Vorderkantenaußenschicht überlappen, so dass die Verbindungselemente sowohl durch die Hauptkörperaußenschicht als auch durch die Vorderkantenaußenschicht hindurchgeführt sind. Bevorzugt ist hierbei, dass die Hauptkörperaußenschicht unter die Vorderkantenaußenschicht geführt ist und die Vorderkantenaußenschicht somit mit einer nach innenliegenden Fügeseite auf der äußeren Oberfläche der Hauptkörperaußenschicht aufliegt. Die Hauptkörperaußenschicht ist mit einer innenliegenden Fügeseite wiederum an einem Element der Hauptkörper-Tragstruktur angeordnet, sodass sich eine feste Verbindung ergibt.

Die Erfindung wird anhand der beigefügten Figuren beispielhaft näher erläutert. Es zeigen:
- Figur 1: schematische Darstellung eines Ausschnittes eines aerodynamischen Profilkörpers im Bereich der Verbindungsanordnung gemäß dem Stand der Technik;
- Figur 2: Explosionsdarstellung der Figur 1;
- Figur 3: Detailausschnitt des Fügespaltes mit Drucksenke;
- Figur 4: Schematische Darstellung einer HLFC Vorderkantentrennstelle;
- Figur 5: Schematische Darstellung einer Vorderkantentrennstelle ohne HLFC.

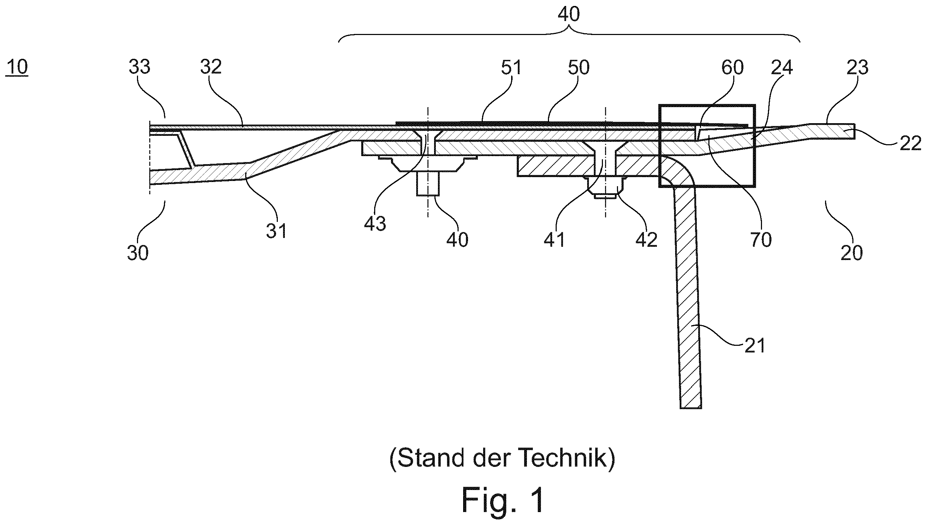

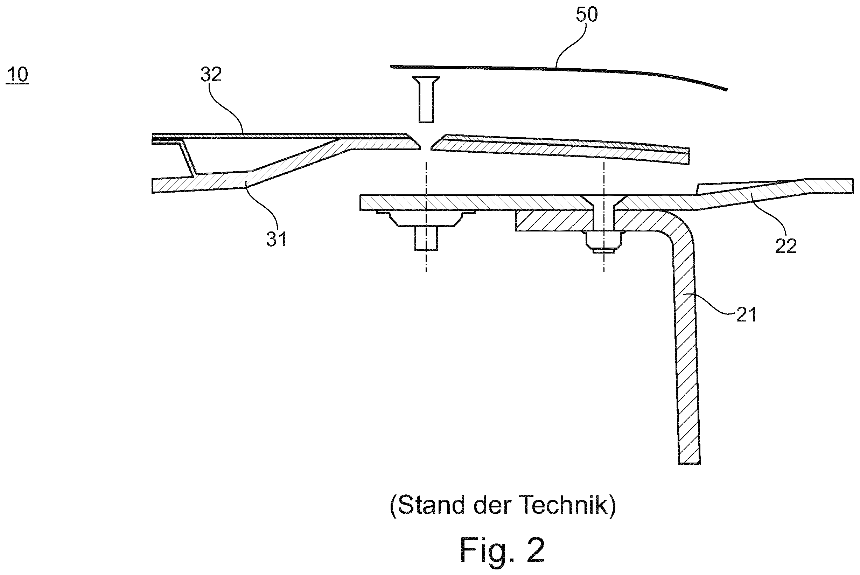

Figur 1 und 2 zeigen als Stand der Technik einen Ausschnitt eines aerodynamischen Profilkörpers 10 im Bereich der Verbindungsanordnung 40 zwischen dem Hauptkörper 20 und dem Vorderkantenkörper 30. Der Hauptkörper 20 weist eine innenliegende Hauptkörper-Tragstruktur 21 auf, die im Ausführungsbeispiel der Figur 1 und 2 lediglich als Vorderholm dargestellt ist. Der Hauptkörper 20 weist in der Regel jedoch noch weitere Elemente auf, welche die Hauptkörper-Tragstruktur 21 bilden. Des Weiteren weist der Hauptkörper 20 eine an dem Vorderholm 21 befestigte Hauptkörperaußenschicht 22 auf, die im Ausführungsbeispiel der Figur 1 und 2 die Außenschale des Hauptkörpers 20 bildet. Die Hauptkörperaußenschicht 22 hat eine äußere Oberfläche 23, die einen Teil der aerodynamisch umströmbaren Oberfläche des gesamten Profilkörpers 10 bildet.

Des Weiteren weist der Profilkörper 10 eine an dem Hauptkörper 20 befestigte Vorderkante 30 auf, die ähnlich wie der Hauptkörper 20 eine Vorderkanten-Tragstruktur 31 sowie eine Vorderkantenaußenschicht 32 hat. Es ist in den Figuren 1 und 2 angedeutet, dass die Vorderkanten-Tragstruktur 31 fachwerkartig oder wellblechartig ausgebildet ist, wobei die Außenschicht 32 auf dieser Tragstruktur 31 der Vorderkante 30 angeordnet ist. Denkbar sind selbstverständlich aber auch andere Tragstruktur-Konstruktionen und Konstruktionen ohne Grenzschichtabsaugung.

Die Außenschicht 32 der Vorderkante 30 kann dabei perforiert und/oder geschlitzt sein, sodass durch eine nicht dargestellte Absaugeinrichtung die Grenzschichtströmung an der äußeren Oberfläche 33 der Außenschicht 32 abgesaugt und sich somit immer wieder eine neue Grenzschichtströmung ausbilden kann. Hierdurch kann eine Hybridlaminarisierung aus aktiver Grenzschichtabsaugung und natürliche Laminarhaltung realisiert werden. In Kombination mit einer fachwerkartig oder wellblechartig ausgebildeten Vorderkanten-Tragstruktur werden Kammern in der Tragstruktur gebildet, in denen ein Unterdruck anliegt und die mit der Perforation der Außenschicht in Wirkverbindung stehen, so dass die Grenzschicht abgesaugt werden kann.

Im Bereich der Verbindungsanordnung 40 ist die Hauptkörperaußenschicht 22 in Richtung Innenseite des Profilkörpers 10 herabgesetzt und wird so unter die Vorderkantenaußenschicht 32 sowie im Ausführungsbeispiel der Figur 1 und 2 auch unter die Vorderkanten-Tragstruktur 31 geführt. Denn im Bereich der Verbindungsanordnung 40 liegt die Außenschicht 32 direkt an einer Verlängerung der Tragstruktur 31 der Vorderkante 30 an und bildet dabei eine gemeinsame Einheit.

Eine erste Reihe von Verbindungselementen 41 werden dabei im Bereich der Verbindungsanordnung 40 durch die Hauptkörperaußenschicht 22, die unter die Vorderkante 30 geführt ist, und durch einen Schenkel des Vorderholms 21 des Hauptkörpers 20 hindurchgeführt und an einem Gegenstück 42 in Form eines Gewindes befestigt. Das Gewinde 42 ist dabei fest an dem Schenkel des Vorderholms 21 angeordnet, sodass sich die Verbindungselemente 41 form- und kraftschlüssig an dem Gegenstück 42 befestigen lassen. Hierdurch wird erreicht, dass die Außenschale 22 des Hauptkörpers 20 von außen an der dafür vorgesehenen Tragstruktur und des Hauptkörpers 20 befestigt werden kann, dass kein Zugang von innen notwendig ist.

Des Weiteren ist eine zweite Reihe von Verbindungselementen 43 vorgesehen, die durch die Außenschicht 32 der Vorderkante 30 und die unter die Vorderkante 30 geführte Außenschicht 22 des Hauptkörpers 20 geführt sind und mit einem an der Innenseite der Außenschicht 22 des Hauptkörpers 20 angeordneten Gegenstück 44 im Eingriff stehen. Dadurch kann die erste Reihe Verbindungselemente 41 sicher abgedeckt werden, sodass lediglich die Köpfe der zweiten Reihe Verbindungselemente 43 in der äußeren Oberfläche 33 der Außenschicht 32 verbleiben.

Bei dem Gegenstück 44 kann es sich ebenfalls um eine Gewindeanordnung handeln, in welche die zweite Reihe von Verbindungselementen 43 eingeschraubt werden kann. Die Gewindeanordnung 44 ist dabei fest mit dem Hauptkörper 20 verbunden und sichert so eine sichere Befestigung der Vorderkante 30 an dem Hauptkörper 20.

Im Bereich der Verbindungsanordnung 40 ist nunmehr ein Abdeckelement 50, bspw. in Form einer biegesteifen Abdeckfolie wie eine Metallfolie, auf die äußere Oberfläche 33 aufgebracht, die zumindest die zweite Reihe der Verbindungselemente 43 abdeckt und sich über einen im hinteren Bereich zwischen Vorderkante 30 und Hauptkörper 20 gebildeten Fügespalt 60 erstreckt und diesen abdeckt. Das Abdeckelement 50 weist dabei eine äußere Oberfläche 51 auf, die Teil der aerodynamisch umströmbaren Oberfläche des Profilkörpers 10 wird.

Die Hauptkörperaußenschicht 22 ist dabei im Bereich der Verbindungsanordnung 40 in den Innenraum des Profilkörpers 10 schräg verlaufend angeordnet, um so einen Überlappungsbereich bilden zu können. Um den Fügespalt 60 möglichst klein zu halten, ist ein keilförmiger Einleger 70 vorgesehen, der die nach innen verlaufende Abschrägung 24 der Hauptkörperaußenschicht 22 auffüllen soll. Hierdurch können Fertigungstoleranzen in der Dicke der Vorderkante 30 sowie des Hauptkörpers 20 ausgeglichen werden.

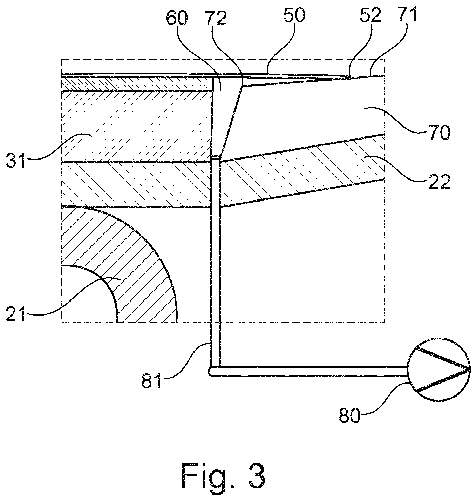

Figur 3 zeigt in einer Detaildarstellung den Bereich mit dem Fügespalt 60. Zu erkennen ist, dass die Auflagefläche 71 des keilförmigen Einlegers 70, welche die nach außen weisende Oberfläche darstellt, in Richtung Innenraum abgeschrägt ist und in Richtung der Vorderkante 30 schräg nach unten verläuft. Hierdurch bildet sich ein Absatz zwischen der Vorderkantenaußenschicht 32 und der Auflagefläche 71 an der vorderen Kante 72 des Fügespaltes 60.

Durch eine wölbungsbedingte Vorspannung des Abdeckelementes wird die hintere Kante 52 des Abdeckelementes 50 auf die tiefergestellte Auflagefläche 71 des keilförmigen Einlegers 70 mit einer Anpresskraft gedrückt, sodass ein weicher und homogener Übergang gebildet wird. Der Fügespalt 60 wird sicher abgedeckt und es verbleiben keine Welligkeiten oder anderweitige Störungen in der äußeren Oberfläche, die einen Umschlag in eine turbulente Grenzschichtströmung begünstigen könnten.

Wie in Figur 3 zu erkennen ist, bildet die Abdeckung durch das Abdeckelement 50 über dem Fügespalt 60 zusammen mit diesem eine Kavität, die über einen Fluidkanal 81 mit einer Drucksenke in Form einer Unterdruckpumpe 80 verbunden ist. Die Unterdruckpumpe 80 saugt dabei kontinuierlich die in dem Fügespalt 60 vorhandene Luft ab und erzeugt somit in dem Fügespalt 60 einen Unterdruck, der so eingestellt ist, dass er geringer ist als der umgebende Atmosphärendruck. Hierdurch wird das Abdeckelement 50 in Richtung Fügespalt 60 bzw. in Richtung Profilkörper 10 gedrückt, sodass ein ungewolltes Abheben des Abdeckelementes 50 vermieden wird.

Durch den Unterdruck wird die Auflagenkraft, mit der das Abdeckelement 50 mit der hinteren Kante 52 auf den Profilkörper gedrückt wird, erhöht, um zu verhindern, dass das Abdeckelement 50 zum Schwingen angeregt wird und im Luftstrom vibriert. Die hintere Kante 52 das Abdeckelement des 50 ist dabei nicht mit dem Hauptkörper fest verbunden, um die temperaturbedingten Größenschwankungen auszugleichen.

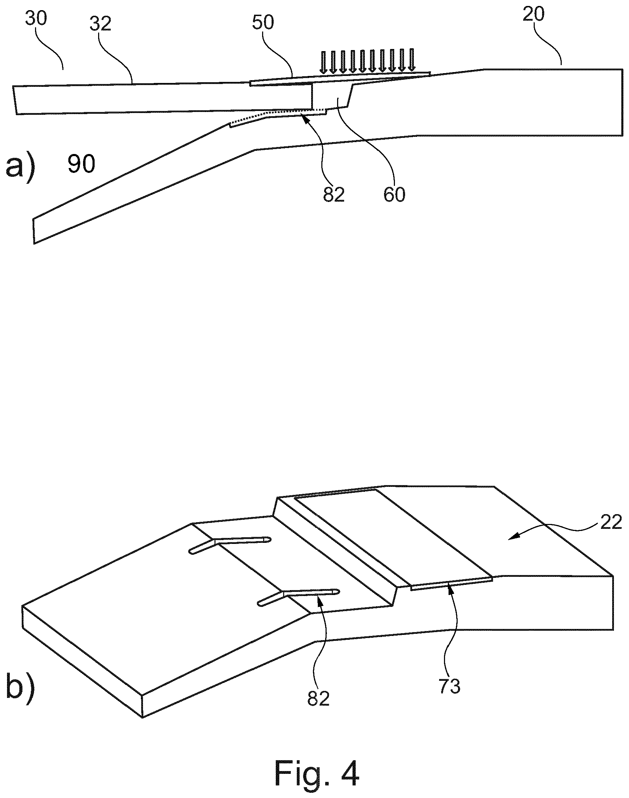

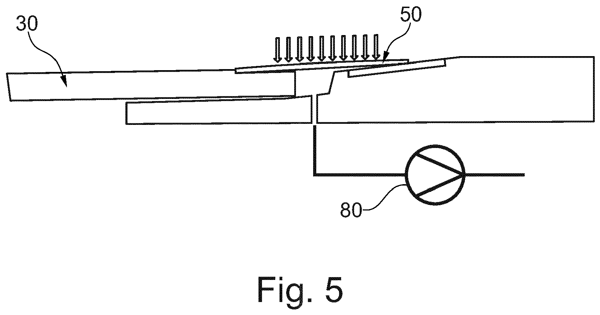

Die Darstellungen in der Figur 4 zeigen schematisch die Trennstelle zwischen dem Vorderkantenkörper 30 und dem Hauptkörper 20. Zur Vereinfachung ist in den Figuren 4 und 5 der Vorderkantenkörper 30 und der Hauptkörper 20 ohne die Tragstruktur in einer vereinfachten Darstellung gezeigt.

Wie in Figur 4 zu erkennen ist, wird unter der Vorderkantenaußenschicht 32 des Vorderkantenkörpers 30 eine Absaugkammer 90 gebildet, die mit einer Mehrzahl von Öffnungen (Perforation) in der Vorderkantenaußenschicht 32 derart in Wirkverbindung steht, dass bei einem eingestellten Unterdruck in der Absaugkammer 90 die Grenzschicht an der äußeren Vorderkantenaußenschicht 32 in die Kammer 90 abgesaugt wird. Hierdurch wird eine aktive Laminarhaltung der äußeren Grenzschicht realisiert, was auch unter der Abkürzung HLFC (high laminar flow control) bekannt ist. Sowohl die Öffnungen in der Vorderkantenaußenschicht 32 als auch die Drucksenke sind der Einfachheit halber in der Figur 4 nicht gezeigt.

Im Bereich des Übergangs, bei dem ein Teil des Hauptkörpers 20 unter die Vorderkantenaußenschicht 32 verläuft, befinden sich eine Mehrzahl von Druckausgleichskanälen 82, welche die Absaugkammer 90 für das HLFC-System mit dem Fügespalt 60 verwenden, sodass der in der Absaugkammer 90 eingestellte Unterdruck zum Absaugen der Grenzschicht auch in dem Fügespalt 60 eingestellt wird.

In der in der Figur 4 gezeigten Ausführungsform bedarf es demnach nur einer Saugpumpe bzw. einer Drucksenke, um sowohl die Grenzschichtabsaugung an der Vorderkante zu realisieren als auch einen Unterdruck im Fügespalt 60 einzustellen, um das Abdeckelement 50 an den Profilkörper 10 zu pressen.

Die hintere Kante 52 des Abdeckelementes 50 liegt dabei auf einem in der Hauptkörperaußenschicht 22 eingebetteten Erosionsschutzschicht 73 auf, um eine Beschädigung der Hauptkörperaußenschicht 22 des Hauptkörpers 20 zu vermeiden. Eine solche Beschädigung kann dabei beispielsweise dadurch entstehen, dass aufgrund der großen Temperaturdifferenz zwischen Bodenbetrieb und Flugbetrieb eine mechanische Scherbelastung durch das Abdeckelement 50 auf die Oberfläche bewirkt. Durch die Erosionsschutzschicht 73 kann dies verhindert werden.

In der Figur 5 ist eine zu der Figur 3 ähnliche Ausführungsform gezeigt, bei der der Fügespalt 60 mit einer Unterdruckpumpe 80 über einen Fluidkanal 81 in Wirkverbindung steht, um einen Unterdruck im Fügespalt 60 einzustellen. Dieser Ausführungsform ist besonders dann vorteilhaft, wenn der Profilkörper 10 nicht über eine aktive Grenzschichtabsaugung mithilfe eines HLFC-Systems verfügt.

### Bezugszeichenliste

- 10: Profilkörper
- 20: Hauptkörper
- 21: Hauptkörper-Tragstruktur
- 22: Hauptkörperaußenschicht
- 23: äußere Oberfläche der Hauptkörperaußenschicht
- 24: Abschrägung der Hauptkörperaußenschicht
- 30: Vorderkantenkörper
- 31: Vorderkanten-Tragstruktur
- 32: Vorderkantenaußenschicht
- 33: äußere Oberfläche der Vorderkantenaußenschicht
- 40: Verbindungsanordnung
- 41: erste Reihe Verbindungselemente
- 42: Gegenstück der ersten Reihe Verbindungselemente
- 43: zweite Reihe Verbindungselemente
- 44: Gegenstück der zweiten Reihe Verbindungselemente
- 50: Abdeckelement
- 51: äußere Oberfläche des Abdeckelementes
- 52: hintere Kante des Abdeckelementes
- 60: Fügespalt
- 70: keilförmige Einleger
- 71: Auflagefläche des keilförmigen Einlegers (äußere Oberfläche)
- 72: vorderen Kante des keilförmigen Einlegers
- 73: Erosionsschutzschicht
- 80: Unterdruckpumpe
- 81: Fluidkanal
- 82: Druckausgleichskanäle
- 90: Absaugkammer für ein HLFC-System

## Patentansprüche

1. Aerodynamischer Profilkörper (10) für Luftfahrzeuge mit einer aerodynamisch umströmbaren Oberfläche, aufweisend:
- einen Hauptkörper (20) mit einer Hauptkörperaußenschicht (22) als Teil der aerodynamisch umströmbaren Oberfläche,
- wenigstens einen Vorderkantenkörper (30) mit einer Vorderkantenaußenschicht (32) als Teil der aerodynamisch umströmbaren Oberfläche,
- eine Verbindungsanordnung (40), mit der der wenigstens eine Vorderkantenkörper (30) an dem Hauptkörper (20) befestigt oder befestigbar ist, indem Verbindungselemente im Bereich der Verbindungsanordnung (40) von außen durch die aerodynamisch umströmbare Oberfläche hindurchgeführt und mit im Inneren des Profilkörpers (10) liegenden Gegenstücken zur Befestigung im Eingriff stehen,
- ein Abdeckelement (50), welches im Bereich der Verbindungsanordnung (40) derart vorgesehen ist, dass die durch die aerodynamisch umströmbare Oberfläche hindurchgeführten Verbindungselemente verdeckt werden und sich das Abdeckelement (50) dabei über einen Fügespalt (60) zwischen dem Teil der aerodynamisch umströmbaren Oberfläche des Hauptkörpers (20) und dem Teil der aerodynamisch umströmbaren Oberfläche des Vorderkantenkörpers (30) erstreckt,
**dadurch gekennzeichnet, dass**
- der Fügespalt (60) mit einer Drucksenke in Wirkverbindung steht, sodass ein im Verhältnis zum äußeren Umgebungsdruck verringerter Unterdruck im Fügespalt (60) einstellbar ist, und
- das Abdeckelement (50) nur an einem der beiden Körper (20, 30) befestigt ist und mit einer entsprechenden Andruckkraft auf den jeweils anderen Körper drückt.

2. Aerodynamischer Profilkörper (10) nach Anspruch 1, **dadurch gekennzeichnet, dass** der Hauptkörper (20) eine Hauptkörper-Tragstruktur (21) aufweist, an der die Hauptkörperaußenschicht (22) als Teil der aerodynamisch umströmbaren Oberfläche angeordnet ist.

3. Aerodynamischer Profilkörper (10) nach Anspruch 1 oder 2, **dadurch gekennzeichnet, dass** der Vorderkantenkörper (30) eine Vorderkanten-Tragstruktur (31) aufweist, an der die Vorderkantenaußenschicht (32) als Teil der aerodynamisch umströmbaren Oberfläche angeordnet ist.

4. Aerodynamischer Profilkörper (10) nach einem der Ansprüche 1 bis 3, **dadurch gekennzeichnet, dass** die Vorderkantenaußenschicht (32) eine Mehrzahl von Öffnungen aufweist, die mit der Drucksenke derart in Wirkverbindung stehen, dass durch die Öffnungen in der Vorderkantenaußenschicht (32) die Grenzschichtströmung an der äußeren Strömungsoberfläche abgesaugt wird.

5. Aerodynamischer Profilkörper (10) nach Anspruch 4, **dadurch gekennzeichnet, dass** die Öffnungen in der Vorderkantenaußenschicht (32) mit mindestens einer Druckkammer in Wirkverbindung stehen, in der mittels der Drucksenke ein Unterdruck eingestellt oder einstellbar ist, wobei die Druckkammer weiterhin über mindestens einen Druckausgleichskanal (82) mit dem Fügespalt (60) in Wirkverbindung steht, um den Unterdruck auch im Fügespalt (60) einzustellen.

6. Aerodynamischer Profilkörper (10) nach einem der Ansprüche 1 bis 4, **dadurch gekennzeichnet, dass** der Fügespalt (60) über einen Fluidkanal (81) mit einer Unterdruckpumpe (80) als Drucksenke in Wirkverbindung steht.

7. Aerodynamischer Profilkörper (10) nach einem der vorhergehenden Ansprüche, **dadurch gekennzeichnet, dass** die Verbindungsanordnung (40) einen keilförmigen Einleger (70) hat, dessen nach außen weisende Oberfläche in Richtung Fügespalt (60) nach innen in Richtung Profilkörper (10) abgeschrägt ist.

8. Aerodynamischer Profilkörper (10) nach einem der vorhergehenden Ansprüche, **dadurch gekennzeichnet, dass** das Abdeckelement (50) zumindest im den Fügespalt (60) überspannenden Abschnitt eine wölbungsbedingte Vorspannung in Richtung der aerodynamisch umströmbaren Oberfläche aufweist.

9. Aerodynamischer Profilkörper (10) nach einem der vorhergehenden Ansprüche, **dadurch gekennzeichnet, dass** das Abdeckelement (50) mit einem Außenrand des den Fügespalt (60) überspannenden Abschnittes auf einer Erosionsschutzschicht (73) drückt, die aus einem von dem Material der Hauptkörperaußenschicht (22) verschiedenen Material gebildet ist.

10. Aerodynamischer Profilkörper (10) nach einem der vorhergehenden Ansprüche, **dadurch gekennzeichnet, dass** das Abdeckelement (50) aus einem Metallmaterial, insbesondere aus Stahl, Titan oder Aluminium, oder aus einem Kunststoffmaterial gebildet ist.

11. Aerodynamischer Profilkörper (10) nach einem der vorhergehenden Ansprüche, **dadurch gekennzeichnet, dass** das Abdeckelement (50) eine im Wesentlichen biegesteife Abdeckfolie ist.

12. Aerodynamischer Profilkörper (10) nach einem der vorhergehenden Ansprüche, **dadurch gekennzeichnet, dass** das Abdeckelement (50) eine Dicke von weniger als 0,6 mm, vorzugsweise von weniger als 0,25 mm und besonders vorzugsweise zwischen 0,125 mm und 0,1 mm hat.

13. Aerodynamischer Profilkörper (10) nach einem der vorhergehenden Ansprüche, **dadurch gekennzeichnet, dass** im Bereich der Verbindungsanordnung (40) sich die Hauptkörperaußenschicht (22) und die Vorderkantenaußenschicht (32) überlappen, so dass die Verbindungselemente sowohl durch die Hauptkörperaußenschicht (22) als auch durch die Vorderkantenaußenschicht (32) hindurchgeführt sind.

## Claims

1. Aerodynamic profile body (10) for aircraft with an aerodynamically flowable surface, comprising:
- a main body (20) with a main body outer layer (22) as part of the aerodynamically flowable surface,
- at least one leading edge body (30) with a leading edge outer layer (32) as part of the aerodynamically flowable surface,
- a connection arrangement (40) with which the at least one leading edge body (30) is or can be attached to the main body (20) by means of connecting elements in the region of the connection arrangement (40) being passed through the aerodynamically flowable surface from the outside and engaging with counterparts located inside the profile body (10) for fastening,
- a cover element (50) which is provided in the area of the connecting arrangement (40) in such a way that the connecting elements passed through the aerodynamically flowable surface are concealed and the cover element (50) extends over a joint gap (60) between the part of the aerodynamically flowable surface of the main body (20) and the part of the aerodynamically flowable surface of the front edge body (30),
**characterized in that**
- the joint gap (60) is operatively connected to a pressure sink so that a negative pressure reduced in relation to the external ambient pressure can be set in the joint gap (60), and
- the cover element (50) is attached to only one of the two bodies (20, 30) and presses against the other body with a corresponding contact force.

2. Aerodynamic profile body (10) according to claim 1, **characterized in that** the main body (20) has a main body support structure (21) on which the main body outer layer (22) is arranged as part of the aerodynamically flowable surface.

3. Aerodynamic profile body (10) according to claim 1 or 2, **characterized in that** the leading edge body (30) has a leading edge support structure (31) on which the leading edge outer layer (32) is arranged as part of the aerodynamically flowable surface.

4. Aerodynamic profile body (10) according to one of claims 1 to 3, **characterized in that** the front edge outer layer (32) has a plurality of openings that are operatively connected to the pressure sink in such a way that the boundary layer flow at the outer flow surface is sucked in through the openings in the front edge outer layer (32).

5. Aerodynamic profile body (10) according to claim 4, **characterized in that** the openings in the front edge outer layer (32) are operatively connected to at least one pressure chamber in which a negative pressure is set or can be set by means of the pressure sink, wherein the pressure chamber is further operatively connected via at least one pressure equalization channel (82) with the joint gap (60) in order to also set the negative pressure in the joint gap (60).

6. Aerodynamic profile body (10) according to one of claims 1 to 4, **characterized in that** the joint gap (60) is operatively connected via a fluid channel (81) to a vacuum pump (80) as a pressure sink.

7. Aerodynamic profile body (10) according to one of the preceding claims, **characterized in that** the connecting arrangement (40) has a wedge-shaped insert (70) whose outward-facing surface is bevelled inwards towards the profile body (10) in the direction of the joint gap (60).

8. Aerodynamic profile body (10) according to one of the preceding claims, **characterized in that** the cover element (50) has a curvature-induced preload in the direction of the aerodynamically flowable surface, at least in the section spanning the joint gap (60).

9. Aerodynamic profile body (10) according to one of the preceding claims, **characterized in that** the cover element (50) presses with an outer edge of the section spanning of the joint gap (60) on an erosion protection layer (73) which is formed from a material different from the material of the main body outer layer (22).

10. Aerodynamic profile body (10) according to one of the preceding claims, **characterized in that** the cover element (50) is formed from a metal material, in particular steel, titanium or aluminum, or from a plastic material.

11. Aerodynamic profile body (10) according to one of the preceding claims, **characterized in that** the cover element (50) is a substantially rigid cover foil.

12. Aerodynamic profile body (10) according to one of the preceding claims, **characterized in that** the cover element (50) has a thickness of less than 0.6 mm, preferably less than 0.25 mm, and particularly preferably between 0.125 mm and 0.1 mm.

13. Aerodynamic profile body (10) according to one of the preceding claims, **characterized in that**, in the region of the connection arrangement (40), the main body outer layer (22) and the leading edge outer layer (32) overlap, so that the connecting elements pass through both the main body outer layer (22) and the leading edge outer layer (32).

## Revendications

1. Corps profilé aérodynamique (10) pour aéronefs, présentant une surface à contourner aérodynamiquement, comprenant :
- un corps principal (20) ayant une couche extérieure de corps principal (22) en tant que partie de la surface à contourner aérodynamiquement,
- au moins un corps de bord d'attaque (30) ayant une couche extérieure de bord d'attaque (32) en tant que partie de la surface à contourner aérodynamiquement,
- un ensemble de liaison (40) par lequel ledit au moins un corps de bord d'attaque (30) est fixé ou peut être fixé au corps principal (20) du fait que, dans la zone de l'ensemble de liaison (40), des éléments de liaison sont menés depuis l'extérieur à travers la surface à contourner aérodynamiquement et viennent en prise avec des contre-pièces de fixation situées à l'intérieur du corps profilé (10),
- un élément de recouvrement (50) qui est prévu dans la zone de l'ensemble de liaison (40) de telle sorte que les éléments de liaison menés à travers la surface à contourner aérodynamiquement soient recouverts et que l'élément de recouvrement (50) s'étende alors sur un interstice de jonction (60) situé entre la partie de la surface à contourner aérodynamiquement du corps principal (20) et la partie de la surface à contourner aérodynamiquement du corps de bord d'attaque (30),
**caractérisé en ce que**
- l'interstice de jonction (60) est en liaison active avec un puits de pression, de manière à permettre de régler une dépression réduite par rapport à la pression ambiante extérieure dans l'interstice de jonction (60), et
- l'élément de recouvrement (50) n'est fixé qu'à l'un des deux corps (20, 30) et pèse sur l'autre corps par une force d'appui correspondante.

2. Corps profilé aérodynamique (10) selon la revendication 1,
**caractérisé en ce que** le corps principal (20) présente une structure porteuse de corps principal (21) sur laquelle est disposée la couche extérieure de corps principal (22) en tant que partie de la surface à contourner aérodynamiquement.

3. Corps profilé aérodynamique (10) selon la revendication 1 ou 2,
**caractérisé en ce que** le corps de bord d'attaque (30) présente une structure porteuse de bord d'attaque (31) sur laquelle est disposée la couche extérieure de bord d'attaque (32) en tant que partie de la surface à contourner aérodynamiquement.

4. Corps profilé aérodynamique (10) selon l'une des revendications 1 à 3,
**caractérisé en ce que** la couche extérieure de bord d'attaque (32) présente une pluralité d'ouvertures qui sont en liaison active avec le puits de pression de manière à aspirer, à travers les ouvertures dans la couche extérieure de bord d'attaque (32), l'écoulement de la couche limite sur la surface d'écoulement extérieure.

5. Corps profilé aérodynamique (10) selon la revendication 4,
**caractérisé en ce que** les ouvertures dans la couche extérieure de bord d'attaque (32) sont en liaison active avec au moins une chambre de pression dans laquelle une dépression est réglée ou peut être réglée au moyen du puits de pression, la chambre de pression étant en outre en liaison active avec l'interstice de jonction (60) par l'intermédiaire d'au moins un canal d'équilibrage de pression (82) afin de régler la dépression également dans l'interstice de jonction (60).

6. Corps profilé aérodynamique (10) selon l'une des revendications 1 à 4,
**caractérisé en ce que** l'interstice de jonction (60) est en liaison active avec une pompe à dépression (80), servant de puits de pression, par l'intermédiaire d'un canal à fluide (81).

7. Corps profilé aérodynamique (10) selon l'une des revendications précédentes,
**caractérisé en ce que** l'ensemble de liaison (40) comporte un insert en forme de coin (70) dont la surface tournée vers l'extérieur dans la direction de l'interstice de jonction (60) est biseautée vers l'intérieur en direction du corps profilé (10).

8. Corps profilé aérodynamique (10) selon l'une des revendications précédentes,
**caractérisé en ce que** l'élément de recouvrement (50) présente, au moins dans la partie recouvrant l'interstice de jonction (60), une précontrainte due à la courbure en direction de la surface à contourner aérodynamiquement.

9. Corps profilé aérodynamique (10) selon l'une des revendications précédentes,
**caractérisé en ce que**, par un bord extérieur de la partie recouvrant l'interstice de jonction (60), l'élément de recouvrement (50) pèse sur une couche de protection contre l'érosion (73) qui est réalisée en un matériau différent du matériau de la couche extérieure de corps principal (22).

10. Corps profilé aérodynamique (10) selon l'une des revendications précédentes,
**caractérisé en ce que** l'élément de recouvrement (50) est réalisé en un matériau métallique, en particulier en acier, en titane ou en aluminium, ou en un matériau plastique.

11. Corps profilé aérodynamique (10) selon l'une des revendications précédentes,
**caractérisé en ce que** l'élément de recouvrement (50) est une feuille de recouvrement sensiblement rigide à la flexion.

12. Corps profilé aérodynamique (10) selon l'une des revendications précédentes,
**caractérisé en ce que** l'élément de recouvrement (50) a une épaisseur inférieure à 0,6 mm, de préférence inférieure à 0,25 mm et de manière particulièrement préférée comprise entre 0,125 mm et 0,1 mm.

13. Corps profilé aérodynamique (10) selon l'une des revendications précédentes,
**caractérisé en ce que**, dans la zone de l'ensemble de liaison (40), la couche extérieure de corps principal (22) et la couche extérieure de bord d'attaque (32) se chevauchent, de sorte que les éléments de liaison sont menés aussi bien à travers la couche extérieure de corps principal (22) qu'à travers la couche extérieure de bord d'attaque (32).
